# EUROPÄISCHE PATENTANMELDUNG

(11) **EP 1 429 215 A1**
(43) Veröffentlichungstag der Anmeldung: **16.06.2004**
(21) Anmeldenummer: 03012097.6
(22) Anmeldetag: 28.05.2003
(51) Int. Cl.: G05B 19/05, G06F 9/45

(54) **Verfahren zur Ausführung eines ersten Softwareprogramms, welches für eine speicherprogrammierbare Steuerung entwickelt ist, auf einem Personal Computer**

(30) Priorität: 10.12.2002 EP 02027701
(71) Anmelder: SIEMENS AKTIENGESELLSCHAFT, 80333 München (DE)
(72) Erfinder: Kleyer, Dieter, 91074 Herzogenaurach (DE)

(57) **Zusammenfassung**

Erfindungsgemäß wird das erste Softwareprogramm (5) mittels eines vom Personal Computer (10) umfassten Übersetzungsprogramms (15) eingelesen und in ein zweites Softwareprogramm (20) umgesetzt, welches vom Personal Computer (10) ausführbar ist. Dieses zweite Softwareprogramm (20) wird auf dem Personal Computer (10) ausgeführt, so dass eine Steuerungsaufgabe einer speicherprogrammierbaren Steuerung mittels eines erfindungsgemäßen Verfahrens durch einen Personal Computer (10) übernommen werden kann.

## Beschreibung

Die Erfindung betrifft ein Verfahren zur Ausführung eines für eine speicherprogrammierbare Steuerung entwickelten Softwareprogramms auf einem Personal Computer.

Zur Steuerung von verfahrenstechnischen Prozessen werden oftmals bekannte speicherprogrammierbare Steuerungen (SPS) eingesetzt, welche speziell für diesen Einsatzzweck entwickelt und konstruiert wurden. Die Stärken derartiger Steuerungen liegen in ihrer besonderen Eignung hinsichtlich der Bearbeitung typischer Prozesssteuerungsaufgaben, wie beispielsweise Messdatenerfassung, Verknüpfung, Regelung und Ansteuerung von Stellgliedern. Dafür wurden von verschiedenen Herstellern Systeme entwickelt mit einer Anzahl an Steckkarten, welche jeweils auf bestimmt Aufgaben spezialisiert sind.

Eine konkret softwaretechnisch zu bearbeitende Aufgabe wird dann mittels eines entsprechenden Softwareprogramms, welches in die speicherprogrammierbare Steuerung geladen wird, bearbeitet.

Lange Zeit waren speicherprogrammierbare Steuerungen den sogenannten Universalrechnern (Personal Computer) bei verfahrenstechnischen Steuerungen überlegen, insbesondere im Hinblick auf Verarbeitungsgeschwindigkeit und Ausfallsicherheit.

Zunehmend wird die Leistungsfähigkeit derartiger, aus Standardhardware aufgebauter Personal Computer in immer kürzeren Zeitabständen größer. Die Performance-Vorteile speicherprogrammierbarer Steuerungen bei verfahrenstechnischen Steuerungsaufgaben werden damit immer geringer.

Aufgrund der weiten Verbreitung von Personal-Computern, deren Standard-Hardware-Komponenten und deren günstigen Preises ist es wünschenswert, Softwareprogramme, welche für eine speicherprogrammierbare Steuerung entwickelt wurden, auf Personal Computern ausführen zu können um letztere für Prozesssteuerungen nutzbar zu machen.

Ein wesentliches Problem besteht dabei darin, dass die Systemvoraussetzungen an Hard- und Software bei speicherprogrammierbaren Steuerungen und Personal Computern grundsätzliche Unterschiede aufweisen, so dass die Ausführung eines für eine speicherprogrammierbare Steuerung entwickelten Softwareprogramms auf einem Personal Computer üblicherweise die komplette Neuentwicklung eines entsprechenden Softwareprogramms für den Personal Computer erfordert. Dabei können vom Softwareprogramm für die speicherprogrammierbare Steuerung meist lediglich dessen prinzipieller Lösungsansatz, nicht jedoch dessen konkrete Programmstruktur und Realisierung wieder verwendet werden. Ein derartiges Softwareprogramm für den Personal Computer ist daher praktisch eine komplette Neuentwicklung, welche einer entsprechenden Qualitätssicherung bedarf.

Der Erfindung liegt daher die Aufgabe zugrunde, ein verbessertes, möglichst aufwandsarmes Verfahren anzugeben, mittels welchem ein SPS-Steuerungsprogramm auf einem Personal Computer ausgeführt werden kann.

Die Aufgabe wird erfindungsgemäß gelöst durch ein Verfahren zur Ausführung eines ersten Softwareprogramms, welches für eine speicherprogrammierbare Steuerung entwickelt ist, auf einem Personal Computer, mit folgenden Schritten:
1. Das erste Softwareprogramm wird mittels eines Übersetzungsprogramms, welches vom Personal Computer umfasst ist, eingelesen und in ein zweites Softwareprogramm umgesetzt, welches vom Personal Computer ausführbar ist.
2. Das zweite Softwareprogramm wird auf dem Personal Computer ausgeführt.

Das Übersetzungsprogramm macht sich dabei möglichst viele Informationen des ersten Softwareprogramms zunutze, wie beispielsweise dessen spezifischen Aufbau und/oder Ablaufeigenschaften. Das erste Softwareprogramm wird also unter Beibehaltung dessen spezieller Struktureigenschaften mittels des Übersetzungsprogramms auf das zweite Softwareprogramm abgebildet, so dass eine im Wesentlichen manuelle Neuerstellung des zweiten Softwareprogramms unnötig ist.

Dadurch entfällt auch die Notwendigkeit erneuter Qualitätssicherungsmaßnahmen bezüglich des zweiten Softwareprogramms, da bei dessen im Wesentlichen automatischer Erstellung keine fehlerträchtigen Schritte involviert sind.

So ist es möglich, für ein SPS-Softwareprogramm ein entsprechendes, qualitätsgesichertes zweites Softwareprogramm zu erhalten, welches auf einem Personal Computer ausführbar ist.

Bei einer bekannten speicherprogrammierbaren Steuerung übernimmt deren Betriebssystem die Ausführung des ersten Softwareprogramms. Da das Betriebssystem eines Personal Computers dieses erste Softwareprogramm nicht direkt ausführen kann, ist das Übersetzungsprogramm notwendig; dieses kann beispielsweise als ein Interpreter und/oder Compiler ausgebildet sein.

Die Verwendung eines Interpreters bietet den Vorteil, dass ein geladenes erstes Softwareprogramm mittels einer schrittweisen Übersetzung dessen Steueranweisungen in das zweite Softwareprogramm sofort ausgeführt werden kann, ohne dass zuvor die komplette Übersetzung des ersten Softwareprogramms in das zweite Softwareprogramm notwendig ist.

Bei der Verwendung eines Compilers wird das erste Softwareprogramm im Wesentlichen vollständig in das zweite Softwareprogramm übersetzt, bevor es zur Ausführung auf dem Personal Computer kommt. Der wesentliche Vorteil eines Compilers besteht darin, dass das einmal kompilierte zweite Softwareprogramm bei einem erneuten Ausführen auf dem Personal Computer nicht erneut kompiliert/übersetzt werden muss. Weiterhin ist die mittels eines kompilierten Softwareprogramms erzielbare Verarbeitungsgeschwindigkeit sehr hoch, da das kompilierte zweite Softwareprogramm in maschinenlesbarem Code vorliegt, welcher von dem Personal Computer ohne zwischengeschaltete weitere Übersetzungsmechanismen abgearbeitet werden kann.

In einer vorteilhaften Ausgestaltung der Erfindung umfasst das erste Softwareprogramm mindestens einen Programmbaustein und/oder Funktionsbaustein und das Übersetzungsprogramm setzt den Programmbaustein und/oder Funktionsbaustein jeweils in einen ersten Typ an Datencode um.

Die eigentlichen technologischen Steuerungsaufgaben werden bei bekannten SPS-Computerprogrammen mit Hilfe von Programmund Funktionsbausteinen ausgeführt. Diese Steuerungsaufgaben werden bei dieser Ausführungsform der Erfindung in einen bestimmen, ersten Typ an Datencode umgesetzt, so dass die die genannten Steuerungsaufgaben betreffenden Teile des ersten Softwareprogramms vom zweiten Softwareprogramm umfasst werden in Form eines speziellen Dateityps; vorteilhaft umfasst der erste Typ an Datencode dabei die Klasse der DLL-Dateien (Direct Link Library-Files). Es handelt sich dabei um Softwareroutinen, welche während der Laufzeit eines Anwendungsprogramms in den Ablauf des Anwendungsprogramms eingebunden werden.

Die Verwendung von DLL-Dateien ist im Zusammenhang mit der Abarbeitung von Anwendungsprogrammen auf Personal Computern weit verbreitet. Diese Ausführungsform der Erfindung ist daher zur Ausführung des zweiten Softwareprogramms auf einem Personal Computer besonders geeignet.

In einer weiteren Ausführungsform der Erfindung umfasst das erste Softwareprogramm mindestens einen Organisationsbaustein und das Übersetzungsprogramm setzt den Organisationsbaustein in einen zweiten Typ an Datencode um.

Bei bekannten SPS-Steuerungssystemen werden Organisationsbausteine beispielsweise für deren zyklischen Betrieb, für eine zeitgesteuerte Bearbeitung, für eine ereignisgesteuerte Bearbeitung und zur Bearbeitung von Anlauf- und Wiederanlaufprogrammen verwendet.

Bei dieser Ausführungsform der Erfindung werden Organisationsbausteine überführt in einen zweiten Typ an Dateien, insbesondere in die Klasse der auf einem Personal Computer direkt ausführbaren Programme, umfassend sogenannte EXEund/oder BAT-Dateien. Derartige Dateien sind dabei vom zweiten Softwareprogramm umfasst.

Die Organisationsbausteine übernehmen bei SPS-Steuerungssystemen im Wesentlichen die Aufgabe der Programmablaufsteuerung und werden folglich insbesondere beim Start und Wiederanlauf des Steuerungsprogramms oder beim Eintreten definierter Randbedingungen ausgeführt. Im Unterschied zu den Programm und Funktionsbausteinen ist in den Organisationsbausteinen nicht die softwaretechnische Lösung einer technologischen Aufgabe - wie beispielsweise ein Regelungsalgorithmus - niedergelegt, sondern vielmehr deren Verwaltung. Die Erzeugung von direkt ausführbaren Programmen aus den Organisationsbausteinen bietet bei der Verwendung eines Personal Computers insbesondere den Vorteil, dass der Start des zweiten Softwareprogramms auf dem Personal Computer einfach durch Aufruf der einem bestimmten Organisationsbaustein entsprechenden direkt ausführbaren Datei erfolgen kann, ohne dass hierfür eine spezielle Ablaufumgebung auf dem Personal Computer installiert sein muss.

Weiterhin ist es vorteilhaft, wenn das erste Softwareprogramm mindestens einen Datenbaustein umfasst und ein mittels des oder der Datenbausteine gebildetes Speichermodell der speicherprogrammierbaren Steuerung auf dem Personal Computer abgebildet wird.

Auf diese Weise ist es möglich, dass Anweisungen des ersten Softwareprogramms, welche einen Zugriff auf in Datenbausteinen enthaltene Daten umfassen, auf dem Personal Computer entsprechend realisiert werden können, ohne dass es dazu einer Veränderung der Struktur derartiger Anweisungen oder zwischengeschalteter Übersetzungsschritte bedarf.

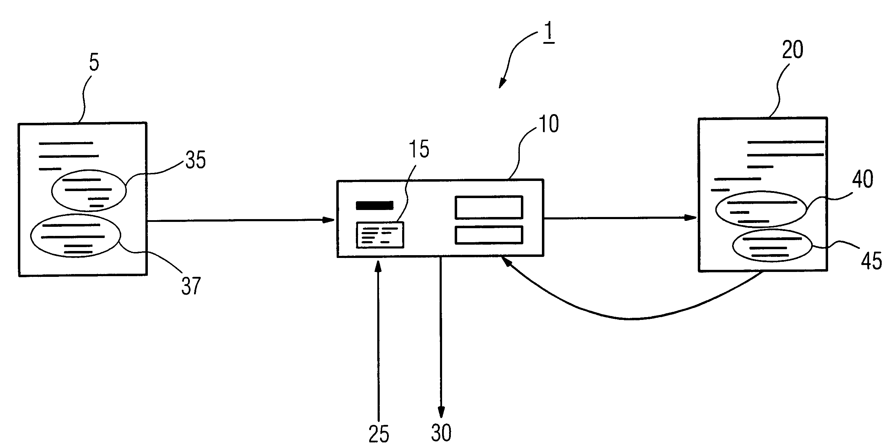

Insbesondere wird dabei eine vom ersten Softwareprogramm umfasste Anweisung des Zugriffs auf einen der Datenbausteine vom Übersetzungsprogramm nicht verändert, so dass mittels der Anweisung ein direkter Zugriff auf Daten des auf dem Personal Computer abgebildeten Speichermodells erfolgen kann. Dies bedeutet, dass bei dieser Ausführungsform der Erfindung eine Anweisung betreffend des Zugriffs auf einen Datenbaustein (beispielsweise "A DB 100") vom Übersetzungsprogramm nicht verändert wird, da infolge der Abbildung des Speichermodells der speicherprogrammierbaren Steuerung auf den Personal Computer eine derartige Anweisung dort direkt ausgeführt werden kann.

In einer besonders vorteilhaften Ausgestaltung der Erfindung werden mehrere für speicherprogrammierbare Steuerungen entwickelte erste Softwareprogramme in entsprechende zweite Softwareprogramme umgesetzt, wobei jedes zweite Softwareprogramm als ein eigener Prozess auf dem Personal Computer ausgeführt wird.

Bekannte speicherprogrammierbare Steuerungen können in der Regel nur ein Steuerungsprogramm bearbeiten; bei dieser Ausführungsform der Erfindung ist dagegen die quasi-parallele Bearbeitung mehrerer derartiger Programme auf einem Personal Computer möglich, da jedem ersten Softwareprogramm ein eigener Prozess zugewiesen wird und alle diese Prozesse dadurch quasi-parallel ausgeführt werden können. Die Nutzung von Rechnerressourcen ist bei dieser Ausführungsform besonders hoch.

Vorteilhaft sind dabei die ersten Softwareprogramme vor der Umsetzung in die entsprechenden zweiten Softwareprogramme ursprünglich für mehrere CPUs entsprechender speicherprogrammierbarer Steuerungen vorgesehen und pro CPU wird vom Übersetzungsprogramm eine auf dem Personal Computer direkt ausführbare Datei erzeugt.

Dies bedeutet, dass bei dieser Ausführungsform die Funktionen mehrerer SPS-CPUs von einem Personal Computer übernommen werden können, welcher üblicherweise nur eine CPU umfasst. Der Aufruf eines einer bestimmten SPS-CPU zugeordneten Steuerungsprogramms auf dem Personal Computer erfolgt dann einfach durch Laden der entsprechenden vom Übersetzungsprogramm erzeugten, direkt ausführbaren Datei.

Vorteilhaft findet eine Koordination der Abläufe der Prozesse auf dem Personal Computer mittels mindestens eines Semaphors statt.

Da auf einem Personal Computer mehrere Prozesse nicht tatsächlich parallel, sondern nur abwechselnd bearbeitet werden können, ist bei dieser Ausführungsform der Erfindung ein Semaphor vorgesehen, welches den Prozessen jeweils eine bestimmte Bearbeitungszeit zuweist und deren abwechselnde Bearbeitung anstößt, so dass scheinbar eine parallele Bearbeitung der Prozesse stattfindet.

Eine Kommunikation zwischen den Prozessen auf dem Personal Computer findet vorteilhaft mittels einer Pipe und/oder eines Memory Mapped Files statt.

Es handelt sich dabei um bekannte und erprobte Kommunikationsmechanismen bei Personal Computern.

In einer weiteren vorteilhaften Ausgestaltung der Erfindung wird eine zyklisch ablaufende Komponente des ersten Softwareprogramms durch das Übersetzungsprogramm in einen thread umgesetzt, welcher vom zweiten Softwareprogramm umfasst ist.

Threads sind bekannte Mittel zur Umsetzung von quasi-parallel ablaufenden Steuerflüssen innerhalb eines Programms.

Die Ausführung des threads auf dem Personal Computer wird vorteilhaft im Bedarfsfall von ereignisgesteuerten Komponenten des zweiten Softwareprogramms unterbrochen.

Ein SPS-Steuerungsprogramm umfasst in der Regel mehrere zyklisch ablaufende Programmabschnitte, deren Bearbeitung im Bedarfsfall, beispielsweise bei einer Betriebsstörung der zu steuernden technischen Anlage, unterbrochen wird, die technische Anlage in einen sicheren Betriebszustand zu bringen.

Diese Funktionalität eines SPS-Steuerungsprogramms ist bei der vorliegenden Ausführungsform der Erfindung realisiert durch die Ausführung des threads, welcher von ereignisgesteuerten Komponenten des zweiten Softwareprogramms unterbrochen werden kann.

In einer anderen vorteilhaften Ausführungsform der Erfindung wird eine zyklisch ablaufende Komponente des ersten Softwareprogramms nach Umsetzung des ersten Softwareprogramms in das zweite Softwareprogramm nach einer Ausführung von ereignisgesteuerten Komponenten des zweiten Softwareprogramms auf dem Personal Computer ausgeführt.

Hierbei werden beispielsweise zeitunkritische Funktionen im Anschluss an zeitgesteuerte Funktionen aufgerufen. Diese Ausführungsform bietet insbesondere den Vorteil, dass ein häufiger Wechsel zwischen Prozessen vermieden wird, da die eher unwichtigen Funktionen (zeitunkritisch) erst im Anschluss an die zeitgesteuerten Funktionen ausgeführt werden und letztere daher nicht ständig von Prozessen unterbrochen werden, die lediglich zeitunkritische Funktionen betreffen.

Vorteilhaft findet eine Kommunikation zwischen dem Personal Computer und einem Prozessleitsystem mittels eines TCP/IPund/oder eines Ethernet-Kommunikationsprotokolls und/oder einer seriellen Schnittstelle statt.

Diese Ausführungsform gestattet eine Verbindung des Personal Computers mit einem Prozessleitsystem, so dass eine Steuerungshierarchie für eine technische Anlage gebildet werden kann.

In einer weiteren vorteilhaften Ausgestaltung der Erfindung sind wesentliche Hardware-Komponenten des Personal Computers redundant vorhanden.

Bei vielen technischen Anwendungen kommt insbesondere der Verfügbarkeit und der Ausfallsicherheit des verwendeten Steuerungssystems und/oder Prozessleitsystems große Bedeutung zu. Beispielsweise erfordert die Steuerung und Überwachung von kritischen Prozessen der technischen Anlage die permanente Verfügbarkeit des Steuerungssystems, so dass der zu steuernde Prozess nicht außer Kontrolle gerät.

Dabei ist es vorteilhaft, wenn im Falle eines Fehlers einer wesentlichen Hardware-Komponente des Personal Computers praktisch unterbrechungsfrei auf die entsprechende redundante Komponente umgeschaltet wird.

Wesentliche Komponenten können dabei beispielsweise die zentrale Recheneinheit, ein Festplattenlaufwerk oder Ein- und Ausgabeeinheiten sein.

Ein automatisches Umschalten von einer defekten auf eine entsprechende, betriebsbereite Komponente ermöglicht den nahezu unterbrechungsfreien Weiterbetrieb des Steuerungssystems und damit der technischen Anlage.

Dazu umfasst der Personal Computer insbesondere einen Fault Tolerant Server.

Derartige Server sind bekannt und bieten die Hardware- und Systemplattform für hochverfügbare PC-basierte Steuerungssysteme.

Vor allem in Anwendungen im Finanzbereich, die extrem hohe Anforderungen an die Ausfallsicherheit der Systeme stellen, haben sich derartige Fault Tolerant Server bereits bewährt.

Bei einem Fault Tolerant Server ist dessen Hardware redundant aufgebaut, es sind also alle wesentlichen Komponenten doppelt oder sogar mehrfach vorhanden. Im Fehlerfall wird, ohne für den Prozess merkbare Auswirkungen und Verzögerungen, auf die entsprechende redundante Hardwarekomponente umgeschaltet. Des Weiteren können bestimmte Hardware-Komponenten unter Spannung getauscht werden, so dass eine Unterbrechung der Stromversorgung des Fault Tolerant Servers nicht notwendig ist und dessen Betrieb dadurch nicht unterbrochen werden muss.

Die Umschaltung auf eine redundante Komponente bei einem Fault Tolerant Server ist eine Systemeigenschaft eines derartigen Servers, so dass bei der Verwendung eines Fault Tolerant Servers beim erfindungsgemäßen Verfahren dabei kein zusätzlicher Aufwand zur Realisierung dieser Funktionalität betrieben werden muss.

Der Begriff "Personal Computer" im Zusammenhang mit der Darstellung des erfindungsgemäßen Verfahrens und dessen vorteilhafter Ausgestaltungen soll ein Computersystem umfassen, welches im Wesentlichen aus Standard-Komponenten aufgebaut ist, die weit verbreitet sind und beispielsweise in normalen Büro-Computern oder im privaten Bereich zum Einsatz kommen. Es soll sich dabei im Unterschied zu bekannten speicherprogrammierbaren Steuerungen also nicht um speziell für Steuerungsaufgaben entwickelte Komponenten und Systeme bzw. Teilsysteme handeln.

Ein Personal Computer im Sinne der Erfindung muss nicht derartig anwendungsfertig aufgebaut sein, dass ein Benutzer beispielsweise direkt Daten in den Personal Computer eingeben, bearbeiten und auf einem Bildschirm betrachten kann. Eingabemittel wie beispielsweise eine Tastatur oder Maus und Ausgabemittel wie beispielsweise ein Bildschirm können, aber müssen nicht vorhanden sein.

Ähnlich wie bei bekannten speicherprogrammierbaren Steuerungen werden beim Einsatz eines erfindungsgemäßen Verfahrens Daten oftmals nicht direkt von einem Benutzer in den Personal Computer eingegeben, sondern beispielsweise mittels eines Bussystems an den Personal Computer übertragen. Des Weiteren werden vom Personal Computer ermittelte Daten meist nicht direkt visualisiert, sondern an eine weitere Rechnereinheit, beispielsweise ein Prozessleitsystem, übergeben. Daher ist es meist nicht erforderlich, dass der Personal Computer über eigene, von einem Benutzer direkt anwendbare, Ein- und/oder Ausgabemittel verfügt.

Im Folgenden wird ein Ausführungsbeispiel der Erfindung näher dargestellt.

### Es zeigt:

FIG eine Vorrichtung 1 zur Durchführung des erfindungsgemäßen Verfahrens.

Ein erstes Softwareprogramm 5, welches für eine speicherprogrammierbare Steuerung entwickelt ist, wird von einem Personal Computer 10 eingelesen. Das erste Softwareprogramm 4 kann dabei beispielsweise als Textdatei im ASCII-Format oder Binär-Format vorliegen. Es kann auf einem Datenträger gespeichert sein oder auch mittels einer Kommunikationsverbindung an den Personal Computer 10 übermittelt werden.

Der Personal Computer 10 umfasst ein Übersetzungsprogramm 15, welches das erste Softwareprogramm 5 umsetzt in ein zweites Softwareprogramm 20, welches vom Personal Computer 10 ausführbar ist.

Das Übersetzungsprogramm 15 ist dabei vorteilhaft als Compiler ausgebildet.

Das erste Softwareprogramm 5 umfasst einen Programmbaustein 35, welcher vom Übersetzungsprogramm 15 überführt wird in eine DLL-Datei 40. Des Weiteren enthält das erste Softwareprogramm 5 einen Organisationsbaustein 37, welcher vom Übersetzungsprogramm 15 in eine EXE-Datei 45 transformiert wird.

Zur Anbindung an einen zu steuernden Prozess sind Eingabedaten 25 aus dem Prozess und Ausgabedaten 30 zur Steuerung des Prozesses vorgesehen.

## Patentansprüche

1. Verfahren zur Ausführung eines ersten Softwareprogramms (5), welches für eine speicherprogrammierbare Steuerung entwickelt ist, auf einem Personal Computer (10),
**gekennzeichnet durch** folgende Schritte:
a) das erste Softwareprogramm (5) wird mittels eines Übersetzungsprogramms (15), welches vom Personal Computer (10) umfasst ist, eingelesen und in ein zweites Softwareprogramm (20) umgesetzt, welches vom Personal Computer (10) ausführbar ist, und
b) das zweite Softwareprogramm (20) wird auf dem Personal Computer ausgeführt (10).

2. Verfahren nach Anspruch 1,
**dadurch gekennzeichnet, dass**
das erste Softwareprogramm (5) mindestens einen Programmbaustein (35) und/oder Funktionsbaustein umfasst und das Übersetzungsprogramm (15) den Programmbaustein (35) und/oder den Funktionsbaustein jeweils in einen ersten Typ an Datencode umsetzt.

3. Verfahren nach Anspruch 2,
**dadurch gekennzeichnet, dass**
der erste Typ an Datencode die Klasse der DLL-Dateien (40) umfasst.

4. Verfahren nach einem der Ansprüche 1 bis 3,
**dadurch gekennzeichnet, dass**
das erste Softwareprogramm (5) mindestens einen Organisationsbaustein (37) umfasst und das Übersetzungsprogramm (15) den Organisationsbaustein in einen zweiten Typ an Datencode umsetzt.

5. Verfahren nach Anspruch 4,
**dadurch gekennzeichnet, dass**
der zweite Typ an Datencode die Klasse der auf einem Personal Computer direkt ausführbaren Programme umfasst, insbesondere EXE- (45) und/oder BAT- Dateien.

6. Verfahren nach einem der Ansprüche 1 bis 5,
**dadurch gekennzeichnet, dass**
das erste Softwareprogramm (5) mindestens einen Datenbaustein umfasst und ein mittels des oder der Datenbausteine gebildetes Speichermodell der speicherprogrammierbaren Steuerung auf dem Personal Computer (10) abgebildet wird.

7. Verfahren nach Anspruch 6,
**dadurch gekennzeichnet, dass**
eine vom ersten Softwareprogramm (5) umfasste Anweisung des Zugriffs auf einen der Datenbausteine vom Übersetzungsprogramm (15) nicht verändert wird, so dass mittels der Anweisung ein direkter Zugriff auf Daten des auf dem Personal Computer (10) abgebildeten Speichermodells erfolgen kann.

8. Verfahren nach einem der Ansprüche 1 bis 7,
**dadurch gekennzeichnet, dass**
mehrere für speicherprogrammierbare Steuerungen entwickelte erste Softwareprogramme (5) in entsprechende zweite Softwareprogramme (20) umgesetzt werden, wobei jedes zweite Softwareprogramm (20) als ein eigener Prozess auf dem Personal Computer (10) ausgeführt wird.

9. Verfahren nach Anspruch 8,
**dadurch gekennzeichnet, dass**
die ersten Softwareprogramme (5) vor der Umsetzung in die entsprechenden zweiten Softwareprogramme (20) für mehrere CPUs entsprechender speicherprogrammierbarer Steuerungen vorgesehen sind und pro CPU von dem Übersetzungsprogramm (15) eine auf dem Personal Computer (10) direkt ausführbare Datei erzeugt wird.

10. Verfahren nach Anspruch 8 oder 9,
**dadurch gekennzeichnet, dass**
eine Koordination der Abläufe der Prozesse auf dem Personal Computer (10) mittels mindestens eines Semaphors stattfindet.

11. Verfahren nach einem der Ansprüche 8 bis 10,
**dadurch gekennzeichnet, dass**
eine Kommunikation zwischen den Prozessen auf dem Personal Computer (10) mittels einer Pipe und/oder eines Memory Mapped Files stattfindet.

12. Verfahren nach einem der Ansprüche 1 bis 11,
**dadurch gekennzeichnet, dass**
eine zyklisch ablaufende Komponente des ersten Softwareprogramms (5) durch das Übersetzungsprogramm in einen thread umgesetzt wird, welcher vom zweiten Softwareprogramm (20) umfasst ist.

13. Verfahren nach Anspruch 12,
**dadurch gekennzeichnet, dass**
die Ausführung des threads auf dem Personal Computer (10) im Bedarfsfall von ereignisgesteuerten Komponenten des zweiten Softwareprogramms (20) unterbrochen wird.

14. Verfahren nach einem der Ansprüche 1 bis 11,
**dadurch gekennzeichnet, dass**
eine zyklisch ablaufende Komponente des ersten Softwareprogramms (5) nach Umsetzung des ersten Softwareprogramms (5) in das zweite Softwareprogramm (20) nach einer Ausführung von ereignisgesteuerten Komponenten des zweiten Softwareprogramms (20) auf dem Personal Computer (10) ausgeführt wird.

15. Verfahren nach einem der Ansprüche 1 bis 14,
**dadurch gekennzeichnet, dass**
eine Kommunikation zwischen dem Personal Computer (10) und einem Prozessleitsystem mittels eines TCP/IP- und/oder eines Ethernet-Kommunikationsprotokolls und/oder einer seriellen Schnittstelle stattfindet.

16. Verfahren nach einem der Ansprüche 1 bis 15,
**dadurch gekennzeichnet, dass**
wesentliche Hardware-Komponenten des Personal Computers (10) redundant vorhanden sind.

17. Verfahren nach Anspruch 16,
**dadurch gekennzeichnet, dass**
im Falle eines Fehlers einer wesentlichen Hardware-Komponente des Personal Computers (10) praktisch unterbrechungsfrei auf die entsprechende redundante Komponente umgeschaltet wird.

18. Verfahren nach Anspruch 16 oder 17,
**dadurch gekennzeichnet, dass**
der Personal Computer (10) einen Fault Tolerant Server umfasst.
